# EUROPEAN PATENT SPECIFICATION

(11) **EP 4 173 694 B1**
(45) Date of publication and mention of the grant of the patent: **10.09.2025**
(21) Application number: 21833697.2
(22) Date of filing: 16.06.2021
(51) Int. Cl.: B01D 61/02, B01D 61/58, B01D 63/02, C02F 1/44

(54) **MEMBRANE SEPARATION DEVICE AND CONCENTRATING METHOD**
MEMBRANTRENNVORRICHTUNG UND KONZENTRATIONSVERFAHREN
DISPOSITIF DE SÉPARATION À MEMBRANE ET PROCÉDÉ DE CONCENTRATION

(30) Priority: 30.06.2020 JP 2020113025
(43) Date of publication of application: 03.05.2023
(73) Proprietor: TOYOBO MC Corporation, Osaka 530-0001 (JP)
(72) Inventor: ABE, Yoji, Osaka-shi, Osaka 530-8230 (JP)
(74) Representative: Vossius & Partner Patentanwälte Rechtsanwälte mbB
(86) International application number: PCT/JP2021/022820
(87) International publication number: WO 2022/004381

(56) References cited:
- WO-A1-2018/084246
- WO-A1-2018/084246
- WO-A1-2019/097261
- CN-A- 1 268 390
- JP-A- 2018 515 340
- JP-A- 2018 515 340
- JP-A- 2019 188 330
- JP-A- 2019 188 330
- JP-A- 2021 045 742
- JP-A- H05 269 334
- US-A1- 2016 339 390
- US-A1- 2018 297 867

## Description

### TECHNICAL FIELD

The present invention relates to a membrane separation device and a concentrating method using it.

### BACKGROUND ART

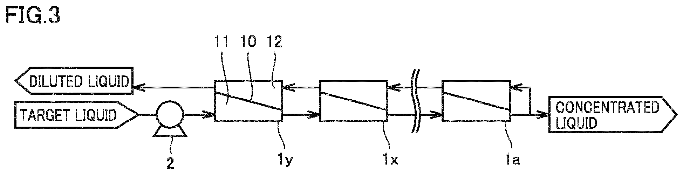

For the purpose of reducing the energy required for desalination using a reverse osmosis (RO) method, a membrane separation method (brine concentration) in which a high-pressure target liquid is passed through first chambers 11 of semipermeable membrane modules 1a, 1x, and 1y and a low-pressure target liquid is passed through second chambers 12 thereof so that water contained in the target liquid inside first chamber 11 moves to the target liquid inside second chamber 12 through a semipermeable membrane 10, thereby discharging the target liquid concentrated (the concentrated liquid) from first chamber 11 and discharging the target liquid diluted (the diluted liquid) from second chamber 12 is under study (refer to Fig. 3).

For example, PTL 1 (WO 2018/084246), PTL 2 (Japanese Patent Laying-Open No. 2019-188330), and PTL 3 (Japanese National Patent Publication No. 2018-515340) disclose using a multistage membrane separation device including a plurality of semipermeable membrane modules coupled in series for brine concentration (BC).
PTL 4 describes a method of solvent recovery which uses a plurality of solvent recovery units to recover solvent from a dilute solution. The solvent recovery units can include a plurality of reverse osmosis or forward osmosis membrane systems arranged in series. PTL 5 describes a "double-channel countercurrent reverse osmosis separation device" and its main component "double-channel reverse osmosis membrane assembly", which is characterized by a method for highly concentrating a solution without using a reverse osmosis membrane with high pressure resistance and a high-pressure pump with high pressure head.
PTL 6 relates generally to a process for water purification including desalination, using a series of one or more forward osmosis membrane systems and more specifically using switchable polar draw solvents, with a membrane system designed to operate with the chemistry and properties of polar solvent material.
PTL 7 describes an air treating membrane apparatus by combining a membrane drier and a membrane separating system and withdrawing a portion of clean dry air as a product and using the residual portion of the air as feed raw material gas to a membrane air separating system.

### CITATION LIST

### PATENT LITERATURE

PTL 1: WO 2018/084246
PTL 2: Japanese Patent Laying-Open No. 2019-188330
PTL 3: Japanese National Patent Publication No. 2018-515340
PTL 4: US 2016/339390 Al
PTL 5: CN 1 268 390 A
PTL 6: US 2018/297867 Al
PTL 7: JP H05 269334 A

### SUMMARY OF THE INVENTION

### TECHNICAL PROBLEM

When water is separated from the target liquid to concentrate the target liquid by brine concentration (BC) using the multistage membrane separation device including the plurality of semipermeable membrane modules in this manner, the diluted liquid containing the separated water passes through second chambers 12 of the plurality of semipermeable membrane modules 1a, 1x, and 1y. Thus, a flow resistance of the diluted liquid increases as the number of semipermeable membrane modules increases.

The liquid that is concentrated while flowing through first chambers 11 is pressurized by a high-pressure pump 2 or the like and can thus pass through first chambers 11 of the plurality of semipermeable membrane modules at a required flow rate. However, when the flow resistance of the liquid that is diluted while flowing through second chambers 12 increases, it is necessary to increase a feed pressure of second chambers 12 to pass the liquid through second chambers 12 of the plurality of semipermeable membrane modules at a required flow rate. When the feed pressure of second chamber 12 is increased, a pressure difference between first chamber 11 and second chamber 12 decreases, which reduces the membrane separation efficiency of the target liquid. Accordingly, the target liquid may not be concentrated to a desired degree. Also, a booster pump 3 may be additionally provided to increase the flow rate inside second chamber 12. However, there is a problem of increase in energy costs required for concentration of the target liquid.

Note that Comparative Example 1 and Fig. 3 and Comparative Example 2 and Fig. 4 of PTL 1 illustrate an example in which the diluted liquid flowing out of a second chamber of each semipermeable membrane module of the membrane separation device is not allowed to flow into a second chamber of another semipermeable membrane module. In this case, the liquid on the dilution side passes through only the second chamber of one semipermeable membrane module, and the flow resistance is smaller than that in the case where the liquid passes through a plurality of second chambers. However, a larger amount of liquid needs to be fed to the second chamber than in the case where the liquid passes through a plurality of second chambers, and there is a concern for reduction in the overall efficiency for obtaining a predetermined concentrated liquid.

Thus, it is an object of the present invention to reduce facility costs, energy consumption, and the like by, in separating water from a first target liquid to concentrate the first target liquid by brine concentration (BC) using a multistage membrane separation device including a plurality of semipermeable membrane modules, reducing the flow resistance of a second target liquid (the liquid to be diluted) containing the separated water.

### SOLUTION TO THE PROBLEM

The present invention provides a membrane separation device that is a multistage membrane separation device, as defined in any one of claims 1 to 6.

Furthermore, the present invention provides a concentrating method, wherein the concentrating method uses the multistage membrane separation device according to any one of claims 1 to 6.

### ADVANTAGEOUS EFFECTS OF THE INVENTION

According to the present invention, it is possible to reduce facility costs, energy consumption, and the like by, in separating water from a first target liquid to concentrate the first target liquid by brine concentration (BC) using a multistage membrane separation device including a plurality of semipermeable membrane modules, reducing the flow resistance of a second target liquid (the liquid to be diluted) containing the separated water.

### BRIEF DESCRIPTION OF THE DRAWINGS

Fig. 1 is a schematic diagram illustrating an example of a membrane separation device of an embodiment.
Fig. 2 is a schematic diagram illustrating a modification of the membrane separation device illustrated in Fig. 1.
Fig. 3 is a schematic diagram illustrating an example of a conventional membrane separation device.
Fig. 4 is a schematic diagram illustrating an example of the conventional membrane separation device.

### DESCRIPTION OF EMBODIMENTS

Hereinbelow, an embodiment of the present invention will be described with reference to the drawings. Note that identical reference signs designate identical or corresponding parts throughout the drawings.

### <Membrane Separation Device>

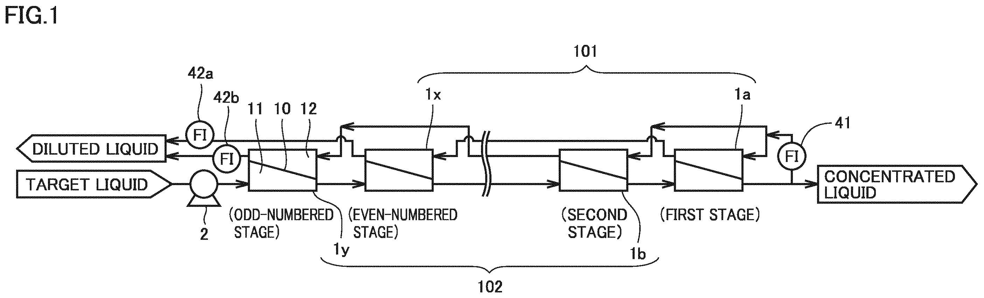

With reference to Fig. 1, a membrane separation device of the present embodiment is a multistage membrane separation device including four or more semipermeable membrane modules 1a, 1b, 1x, and 1y. Note that, while Fig. 1 illustrates four semipermeable membrane modules, semipermeable membrane modules located midway are omitted, and the membrane separation device may include more semipermeable membrane modules.

Each of semipermeable membrane modules 1a, 1b, 1x, and 1y includes a semipermeable membrane 10, and a first chamber 11 and a second chamber 12 separated by semipermeable membrane 10.

The membrane separation device of the present embodiment includes:
a concentration channel including all first chambers 11 of semipermeable membrane modules 1a, 1b, 1x, and 1y connected in series;
a first dilution channel including the second chambers (12) of a first module group (101), wherein the first module group (101) includes the odd-numbered stage semipermeable membrane modules (1a; 1x) from the downstream side of the concentration channel, all the second chambers (12) being connected in series;
a second dilution channel including the second chambers (12) of a second module group (102), wherein the second module group (102) includes the even-numbered stage semipermeable membrane modules (1b;1y) from the downstream side of the concentration channel, all the second chambers (12) being connected in series.

That is, the concentration channel includes all the first chambers 11 and a channel that connects them. The first dilution channel includes second chambers 12 of first module group 101 and a channel that connects them. The second dilution channel includes second chambers 12 of second module group 102 and a channel that connects them.

While the first dilution channel and the second dilution channel are independent channels, the first dilution channel and the second dilution channel are preferably connected in parallel.

Note that the membrane separation device of the present embodiment only has to include at least the first dilution channel and the second dilution channel described above and may include at least one dilution channel through which a second target liquid flows in addition to the first dilution channel and the second dilution channel. That is, the membrane separation device of the present embodiment only has to include two or more independent dilution channels (channels for the second target liquid).

A first target liquid is passed through the concentration channel. That is, the first target liquid sequentially flows through each of first chambers 11 of semipermeable membrane modules 1a, 1b, 1x, and 1y in the direction from semipermeable membrane module 1y to semipermeable membrane module 1a.

The second target liquid is passed through the first dilution channel and the second dilution channel. That is, the second target liquid sequentially flows through each of second chambers 12 of first module group 101 in the direction from semipermeable membrane module 1a to semipermeable membrane module 1x and, in parallel with this, sequentially flows through each of second chambers 12 of second module group 102 in the direction from semipermeable membrane module 1b to semipermeable membrane module 1y.

The first target liquid has a higher pressure than the second target liquid. That is, in each of the semipermeable membrane modules, the liquid (first target liquid) inside first chamber 11 has a higher pressure than the liquid (second target liquid) inside second chamber 12.

Note that the pressure of the first target liquid is increased by a pressurizer or the like. The pressurizer is, for example, a high-pressure pump 2 capable of feeding the first target liquid into the first chamber while pressurizing the first target liquid. Note that the pressurizer is, for example, a tool that pressurizes the liquid inside first chamber 11 from the outside of the semipermeable membrane module instead of the pump.

Since the first target liquid has a higher pressure than the second target liquid, in each of semipermeable membrane modules 1a, 1b, 1x, and 1y, water contained in the first target liquid inside first chamber 11 moves to the second target liquid inside the second chamber through semipermeable membrane 10, and concentrated liquid is discharged from the first chamber and diluted liquid is discharged from the second chamber.

Although the target liquids (the first target liquid and the second target liquid) are not limited to any particular liquid, examples thereof include salt water (e.g., brine, seawater, or lye water) and industrial waste water. In particular, when the target liquid is a solution of high concentration (high osmotic pressure) such as brine, the membrane separation device described above is preferably used to further concentrate the target liquid.

Note that pretreatment for removing microparticles, microorganisms, scale components, and the like contained in the solution may be performed on the target liquids (the first target liquid and the second target liquid). As the pretreatment, various known pretreatments used in the seawater desalination technology and the like can be performed. Examples of the pretreatment include filtration using an NF membrane, a UF membrane, an MF membrane, or the like, addition of sodium hypochlorite, addition of a flocculant, an activated carbon adsorption treatment, and an ion exchange resin treatment. Such a pretreatment is preferably performed before the target liquid is fed to the semipermeable membrane module.

When an osmotic pressure difference (absolute value) between the first target liquid (the liquid to be concentrated) passed through first chamber 11 (high-pressure side) and the second target liquid (the liquid to be diluted) passed through second chamber 12 (low-pressure side) is smaller than the pressure of the first target liquid, membrane separation by BC can be performed in theory. In this case, the difference between the osmotic pressure of the first target liquid and the osmotic pressure of the second target liquid is preferably 30% or less of the pressure of the first target liquid.

In the membrane separation device (membrane separation process) using the BC method of the present embodiment, a positive osmotic force acting in the direction opposite to the pump is less likely to be produced. Thus, concentration proceeds even with a lower pump pressure than in the reverse osmosis (RO) method. Therefore, it is not necessary to use an expensive high-pressure pump and also not necessary to make a treatment facility as pressure resistant as that in the reverse osmosis treatment, and the cost of a capital investment can be reduced. Also, since the pressure required to perform concentration at a predetermined rate is lower than that in the RO method, it is possible to reduce power consumption of the pump and increase the energy efficiency of concentration.

Also, in concentration by the RO method, a positive osmotic force caused by the osmotic pressure of the target liquid concentrated on one side of the semipermeable membrane (the osmotic pressure difference between this osmotic pressure and the osmotic pressure of water that has passed through the RO membrane on the other side of the semipermeable membrane) is produced in the direction opposite to the pressing force of the pump. Thus, when the osmotic pressure of the concentrated target liquid reaches the pressure of the pump, the pressing force of the pump and the positive osmotic force acting in the direction opposite thereto are antagonistic to each other, and water does not pass through the semipermeable membrane beyond that and concentration does not proceed. Thus, even if the target liquid concentrated by the RO membrane is again circulated to the RO membrane, it is not possible to further increase the concentration factor of the target liquid.

On the other hand, in the membrane separation process (concentrating method) using the BC method, in each of the semipermeable membrane modules, the concentration difference (osmotic pressure difference) between the liquid fed to first chamber 11 and the liquid fed to second chamber 12 is smaller than that in the RO method. Thus, the positive osmotic force caused by the osmotic pressure difference is less likely to be produced. Therefore, it is possible to increase the final concentration of the concentrated target liquid compared to the RO method, and it is considered that the target liquid can be concentrated to its saturated concentration in principle.

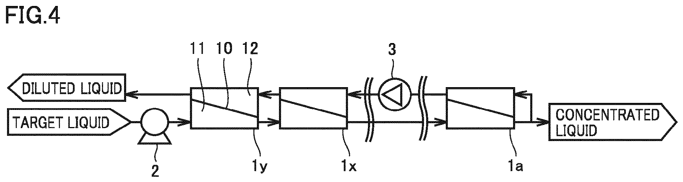

As described above, in the membrane separation device of the present embodiment, the second target liquid flows through at least two channels including the first dilution channel (second chambers 12 of first module group 101) and the second dilution channel (second chambers 12 of the second module group 102). Thus, for the same overall throughput, compared to the conventional membrane separation device in which all second chambers 12 of the plurality of semipermeable membrane modules 1a, 1x, and 1y are connected in series as illustrated in Fig. 3, the flow rate decreases and the channel length also decreases in each of the first dilution channel and the second dilution channel in the membrane separation device of the present embodiment. The flow resistance (pressure loss) is proportional to the flow velocity and proportional to the channel length. Thus, in the membrane separation device of the present embodiment, the flow resistance of the second target liquid is smaller than that in the conventional membrane separation device. Therefore, it is possible to reduce the flow resistance of the second target liquid without the necessity of booster pump 3 as used in the membrane separation device illustrated in Fig. 4 and reduce facility costs, energy consumption, and the like.

In the membrane separation device of the present embodiment, as illustrated in Fig. 1, first module group 101 includes odd-numbered stage semipermeable membrane modules 1a and 1x from the downstream side of the concentration channel (the downstream side in the flow of the first target liquid), and second module group 102 includes even-numbered stage semipermeable membrane modules 1b and 1y from the downstream side of the concentration channel.

In this case, compared to the conventional membrane separation device in which all second chambers 12 of the plurality of semipermeable membrane modules 1a, 1x, and 1y are connected in series as illustrated in Fig. 3, the flow rate is approximately halved and the channel length is also approximately halved in each of the first dilution channel and the second dilution channel in the membrane separation device of the present embodiment. Thus, in the membrane separation device of the present embodiment, the flow resistance of the second target liquid is reduced to approximately a quarter of that in the conventional membrane separation device.

Also, since first module group 101 includes odd-numbered stage semipermeable membrane modules 1a and 1x, and second module group 102 includes even-numbered stage semipermeable membrane modules 1b and 1y, the concentration (osmotic pressure) difference between the second target liquid gradually diluted in the first dilution channel or the second dilution channel and the first target liquid gradually concentrated in the concentration channel in each of the semipermeable membrane modules is reduced, which prevents reduction of the membrane separation efficiency caused by the concentration difference increasing in some of the semipermeable membrane modules.

For example, when the first module group includes half of the semipermeable membrane modules on the downstream side of the concentration channel, and the second module group includes half of the semipermeable membrane modules on the upstream side of the concentration channel, the flow rate of the second target liquid is small in the first module group due to division. Thus, the concentration of the second target liquid is considerably reduced by permeated water flowing thereinto from the first target liquid through the semipermeable membrane. Therefore, when the concentration of the first target liquid becomes higher than the concentration of the second target liquid, and the concentration difference between them increases, a desired concentration degree may not be obtained due to the osmotic pressure in the direction opposite to concentration. On the other hand, in the second module group, when the desired concentration degree cannot be obtained in the first module group, the concentration of the second target liquid may become insufficient when the second target liquid is diluted by permeated water, and a desired concentration degree may not be obtained in like manner. In this manner, an efficient membrane separation process may not be performed as the entire membrane separation device.

On the other hand, when the first module group includes the odd-numbered stage semipermeable membrane modules, and the second module group includes the even-numbered stage semipermeable membrane modules, an efficient membrane separation process can be performed as the entire membrane separation device.

The membrane separation device preferably includes a channel for allowing part of the concentrated liquid discharged from first chamber 11 of the first stage semipermeable membrane module (last module) 1a from the downstream side of the concentration channel to flow, in a divided manner, into second chamber 12 of last module 1a and second chamber 12 of the second stage semipermeable membrane module (next-to-last module) 1b from the downstream side of the concentration channel (refer to Fig. 1).

In the membrane separation device illustrated in Fig. 1, such a channel allows part of the concentrated liquid discharged from first chamber 11 of last module 1a to sequentially flow as the second target liquid through second chambers 12 of semipermeable membrane modules 1a and 1x of first module group 101 and, in parallel with this, sequentially flow through each of second chambers 12 of semipermeable membrane modules 1b and 1y of second module group 102.

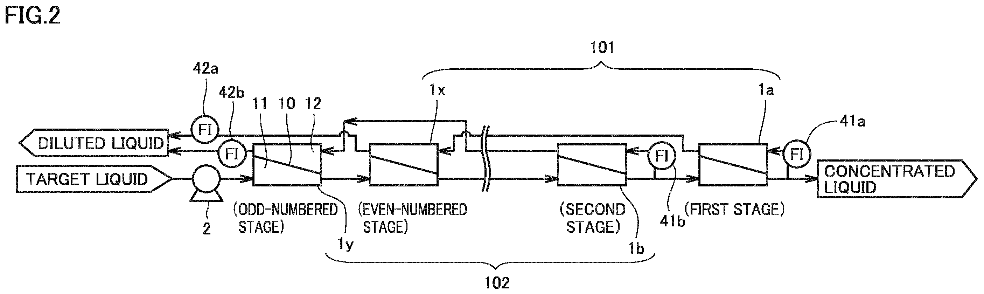

Note that, in the membrane separation device illustrated in Fig. 1, the channel for the high-pressure first target liquid (concentrated liquid) may have one branch portion. Thus, a flowmeter 41 for high pressure may be provided at one location. On the other hand, in a membrane separation device illustrated in Fig. 2 (modification), which will be described further below, it is necessary to provide flowmeters 41 for high pressure at two locations for flow rate control. However, a flowmeter that requires high pressure resistance (e.g., approximately 3MPa) is relatively expensive. Thus, the membrane separation device illustrated in Fig. 1 can reduce facility costs more.

Also, in Fig. 1, a flowmeter 42a is provided at the outlet side of second chamber 12 of semipermeable membrane module 1x, and a flowmeter 42b is provided at the outlet side of second chamber 12 of semipermeable membrane module 1y. Accordingly, it is possible to adjust and manage the flow rate ratio between the first dilution channel (first module group) and the second dilution channel (second module group). These flowmeters do not require particularly high pressure resistance (e.g., approximately 0.3 MPa).

Fig. 2 is a schematic diagram illustrating a modification of the membrane separation device illustrated in Fig. 1. The membrane separation device illustrated in Fig. 2 includes a channel for allowing part of the concentrated liquid discharged from first chamber 11 of the first stage semipermeable membrane module (last module) 1a from the downstream side of the concentration channel to flow into second chamber 12 of last module 1a and a channel for allowing part of the concentrated liquid discharged from first chamber 11 of the second stage semipermeable membrane module (next-to-last module) 1b from the downstream side of the concentration channel to flow into the second chamber of next-to-last module 1b.

In the membrane separation device illustrated in Fig. 2, such a channel allows part of the concentrated liquid discharged from first chamber 11 of last module 1a to sequentially flow as the second target liquid through each of second chambers 12 of semipermeable membrane modules 1a and 1x of first module group 101. Also, part of the concentrated liquid discharged from first chamber 11 of next-to-last module 1b sequentially flows as the second target liquid through each of second chambers 12 of semipermeable membrane modules 1b and 1y of second module group 102.

In this case, compared to the membrane separation device illustrated in Fig. 1, a channel corresponding to the channel for feeding, as the second target liquid, the concentrated liquid discharged from first chamber 11 of last module 1a to second chamber 12 of next-to-last module 1b is omitted. Thus, the amount of piping can be reduced, and the piping is prevented from becoming complicated. Therefore, facility costs such as a piping cost can be reduced.

Note that, in each of the semipermeable membrane modules illustrated in Figs. 1 and 2, the target liquid is passed in opposite directions between first chamber 11 and second chamber 12.

Also, as with the multistage membrane separation devices illustrated in Fig. 2 of PTL 1(WO 2018/084246) and in Fig. 4 of PTL 2 (Japanese Patent Laying-Open No. 2019-188330), one or more other semipermeable membrane modules may be further connected in parallel to each of semipermeable membrane modules 1a, 1b, 1x, and 1y coupled in series.

Note that, as illustrated in Fig. 2 of PTL 1 and Fig. 4 of PTL 2, preferably, the upstream side of the flow of the concentration side (first chambers) (the downstream side of the flow of the dilution side (second chambers)) has more semipermeable membrane modules connected in parallel. In this case, it is considered that, on the downstream side of the second chambers, the cross-sectional area of the channel increases, which reduces the flow resistance. Since water moves from the first chamber to the second chamber through the semipermeable membrane, the downstream side of the flow in the second chambers tends to have higher flow rate and larger flow resistance. Thus, reducing the flow resistance on the downstream side of the second chambers is effective in reducing the flow resistance of the second chambers in the entire membrane separation device.

However, in this case, the cross-sectional area of the channel is increased by increasing the number of semipermeable membrane modules connected in parallel, thereby reducing the flow resistance. Thus, to obtain the same flow resistance reducing effect as in the present invention in which the second target liquid is passed through the first dilution channel and the second dilution channel in a divided manner, four times as many semipermeable membrane modules as in the present invention are required when the flow rate on the second chamber side per membrane separation device is equal. Thus, it is not economically beneficial to increase the number of semipermeable membrane modules connected in parallel merely for the purpose of reducing the flow resistance, and it is beneficial to pass the second target liquid through the first dilution channel and the second dilution channel in a divided manner as in the present invention.

Note that, in the multistage membrane separation device as illustrated in Figs. 1 and 2, the first target liquid flowing through first chambers 11 is sequentially concentrated from semipermeable membrane module 1y to last module 1a, and the flow rate of the first target liquid decreases as the concentration proceeds. When the flow rate per semipermeable membrane module decreases, the concentration efficiency decreases. To suppress such a decrease in the flow rate of the first target liquid on the downstream side of the flow in first chambers 11, preferably, the upstream side of the flow in first chambers 11 has more semipermeable membrane modules connected in parallel, in other words, the downstream side of the flow in first chambers 11 has less semipermeable membrane modules connected in parallel.

In the channel for feeding the target liquid discharged from first chamber 11 of last module 1a to second chamber 12 of last module 1a, a mechanism (not illustrated) that reduces the pressure of the liquid is preferably provided. Examples of such a mechanism include a device that keeps the pressure on the upstream side high and reduces the pressure on the downstream side such as an automatic control valve, and a device having a mechanism that converts energy recovered from a fed liquid having a pressure to energy that assists in driving high-pressure pump 2 or the like such as an energy recovery device.

Note that, in the semipermeable membrane module, examples of the semipermeable membrane include semipermeable membranes called a reverse osmosis membrane (RO membrane), a forward osmosis membrane (FO membrane), a nanofiltration membrane (NF membrane), and an ultrafiltration membrane (UF membrane). The semipermeable membrane is preferably the reverse osmosis membrane, the forward osmosis membrane, or the nanofiltration membrane. Note that, when the reverse osmosis membrane, the forward osmosis membrane, or the nanofiltration membrane is used as the semipermeable membrane, the pressure of the liquid (first target liquid) inside the first chamber is preferably 0.5 to 10.0 MPa.

Typically, the pore size of the RO membrane and the FO membrane is approximately 2 nm or less, and the pore size of the UF membrane is approximately 2 to 100 nm. The NF membrane is the RO membrane having a relatively low rejection rate to ions and salts, and the pore size of the NF membrane is typically approximately 1 to 2 nm. When the RO membrane, the FO membrane, or the NF membrane is used as the semipermeable membrane, the salt removal rate of the RO membrane, the FO membrane, or the NF membrane is preferably 90% or more.

While a material constituting the semipermeable membrane is not limited to any particular material, examples thereof include a cellulose-based resin, a polysulfone-based resin, and a polyamide-based resin. The semipermeable membrane is preferably made of a material containing at least the cellulose-based resin or the polysulfone-based resin.

The cellulose-based resin is preferably a cellulose acetate-based resin. The cellulose acetate-based resin is resistant to chlorine serving as a disinfectant and has the characteristic of inhibiting growth of microorganisms. The cellulose acetate-based resin is preferably cellulose acetate and more preferably cellulose triacetate in terms of durability.

The polysulfone-based resin is preferably a polyether sulfone-based resin. The polyether sulfone-based resin is preferably sulfonated polyether sulfone.

Note that, while semipermeable membrane 10 of the semipermeable membrane module is illustrated as a flat membrane for simplification in the drawings, the shape of the semipermeable membrane is not limited to any particular shape. While semipermeable membrane 10 may be, for example, a flat membrane such as a spiral membrane (spiral-type semipermeable membrane) or a hollow fiber membrane (hollow fiber-type semipermeable membrane), semipermeable membrane 10 is preferably a hollow fiber membrane. Compared to the flat membrane, the hollow fiber membrane is advantageous in that the hollow fiber membrane has a smaller membrane thickness and can increase the membrane area per module, thereby increasing the osmotic efficiency.

Preferably, in each of the semipermeable membrane modules, first chamber 11 is the outside of the hollow fiber membrane, and second chamber 12 is the inside (hollow portion) of the hollow fiber membrane. This is because of the following reason. If a solution flowing inside the hollow fiber membrane is pressurized, it may be difficult to sufficiently perform the pressurization due to a pressure loss increase. Also, while it is typically easy for the hollow fiber membrane to maintain its structure against external pressure, the hollow fiber membrane may rupture when internal pressure increases.

When the second chamber is the inside of the hollow fiber membrane in this manner, since the volume (cross-sectional area) of the inside of the hollow fiber membrane is small, the flow resistance of the second target liquid (the liquid to be diluted) flowing through the second chamber tends to be particularly high. Thus, in particular, when the second chamber is the inside of the hollow fiber membrane, it is effective to reduce the flow resistance of the second target liquid by passing the second target liquid through the first dilution channel (first module group 101) and the second dilution channel (second module group 102) in a divided manner as described above.

A concrete example of the hollow fiber membrane is a single-layer structure membrane composed entirely of a cellulose-based resin. However, the single-layer structure membrane described herein does not have to be a membrane uniform over the entire layer and may be, for example, a membrane non-uniform in its thickness direction. Specifically, the hollow fiber membrane may be a membrane having a dense layer on the outer peripheral surface. The dense layer serves as a separation active layer that substantially defines the pore size of the hollow fiber membrane, and the inner peripheral surface side has a lower density than the dense layer. Since the dense layer serves as the separation active layer that substantially defines the pore size of the hollow fiber membrane, when a solution outside the hollow fiber membrane is pressurized, it is possible to precisely control the movement of molecules from the outside to the inside of the hollow fiber membrane when the hollow fiber membrane has the dense layer on the outer surface thereof.

Another concrete example of the hollow fiber membrane is a two-layer structure membrane having a dense layer made of a polyphenylene-based resin (e.g., sulfonated polyether sulfone) on the outer peripheral surface of a support layer (e.g., a layer made of polyphenylene oxide). Also, another example of the hollow fiber membrane is a two-layer structure membrane having a dense layer made of a polyamide-based resin on the outer peripheral surface of a support layer (e.g., a layer made of polysulfone or polyether sulfone).

### <Concentrating method>

The present embodiment also relates to a concentrating method using the membrane separation device described above.

The concentrating method of the present embodiment uses a multistage membrane separation device including four or more semipermeable membrane modules.

Each of the semipermeable membrane modules includes a semipermeable membrane, and a first chamber and a second chamber separated by the semipermeable membrane.

The membrane separation device includes a concentration channel including all the first chambers of the semipermeable membrane modules connected in series, a first dilution channel including the second chambers of a first module group including some of the semipermeable membrane modules, the second chambers being connected in series, and a second dilution channel including the second chambers of a second module group including the others of the semipermeable membrane modules, the second chambers being connected in series.

A first target liquid is passed through the concentration channel, and a second target liquid is passed through the first dilution channel and the second dilution channel.

The first target liquid has a higher pressure than the second target liquid, whereby, in each of the semipermeable membrane modules, water contained in the first target liquid inside the first chamber moves to the second target liquid inside the second chamber through the semipermeable membrane, and concentrated liquid is discharged from the first chamber and diluted liquid is discharged from the second chamber.

In this manner, the first target liquid is concentrated.

### Examples

Hereinbelow, the present invention will be described in more detail with examples. However, the present invention is not limited thereto.

### (Example 1)

A membrane separation device of Example 1 is basically the membrane separation device as illustrated in Fig. 1, and ten semipermeable membrane modules are coupled to each other.

Note that, the semipermeable membrane is a hollow fiber membrane made of cellulose triacetate. The semipermeable membrane module is a hollow fiber membrane module manufactured by TOYOBO CO., LTD. (model number: FB5255S3SI), has a cylindrical shape, and has a total length of 904 mm, and the outer diameter of an intermediate portion in the axial direction of a container in which the hollow fiber membrane is housed (the portion other than a portion having a large outer diameter near an end in the axial direction) is 157 mm. The same semipermeable membrane module was also used in an example and comparative examples described further below.

In this membrane separation device, a solution at 40°C with 66 g/L of sodium chloride dissolved was fed as the first target liquid to first chamber 11 of semipermeable membrane module 1y on the most upstream side of the concentration channel at a pressure of 6.5 MPa and a flow rate of 2.1 L/min.

Part of the concentrated liquid (the concentrated first target liquid) discharged from first chamber 11 of semipermeable membrane module (last module) 1a on the most downstream side of the concentration channel (the tenth stage from the upstream side) was passed through a branch channel (the channel in which flowmeter 41 is provided) at a flow rate of 0.40 L/min, the part of the concentrated liquid (0.40 L/min) was further divided into two parts by a branch channel to 0.20 mL/min each, one of the two parts was fed to second chamber 12 of last module 1a and passed through the first dilution channel (first module group 101), and the other of the two parts was fed to second chamber 12 of next-to-last module 1b (the ninth stage semipermeable membrane module from the upstream side of the concentration channel) and passed through the second dilution channel (second module group 102).

At this time, the ratio of the total amount of salt fed to second chambers 12 of last module 1a (the tenth stage) and next-to-last module 1b (the ninth stage) to the total salt amount (the product of a feed flow rate and a feed salinity) of the first target liquid before the first target liquid was fed to first chamber 11 of semipermeable membrane module 1y was 64 mass%.

As a result, in Example 1, a flow resistance for sequential passage through each of second chambers 12 of first module group 101 in the direction from last module 1a to semipermeable membrane module 1x was 0.59 MPa. Note that the flow resistance was measured by a Bourdon tube pressure gauge provided at an inlet of the first dilution channel (second chamber 12 of last module 1a) (the same applies to the following).

Further, a flow resistance for sequential passage through each of second chambers 12 of second module group 102 in the direction from next-to-last module 1b to semipermeable membrane module 1y was 0.71 MPa.

Further, the salinity of the concentrated liquid discharged from first chamber 11 of last module 1a was 226 g/L. Note that the salinity was measured by a refractometer (the same applies to the following).

### (Example 2)

A membrane separation device of Example 2 is basically the membrane separation device as illustrated in Fig. 2, and ten semipermeable membrane modules are coupled to each other.

In this membrane separation device, as with Example 1, a solution at 40°C with 66 g/L of sodium chloride dissolved was fed as the first target liquid to first chamber 11 of semipermeable membrane module 1y on the most upstream side of the concentration channel at a pressure of 6.5 MPa and a flow rate of 2.1 L/min.

Part of the concentrated liquid discharged from first chamber 11 of next-to-last module 1b (the ninth stage) was fed to second chamber 12 of next-to-last module 1b through a branch channel (the channel in which flowmeter 41b is provided) and passed through the second dilution channel (second module group 102) at a flow rate of 0.23 L/min corresponding to 32 mass% of the total salt amount of the first target liquid.

Further, part of the concentrated liquid discharged from first chamber 11 of last module 1a (the tenth stage) was fed to second chamber 12 of last module 1a through a branch channel (the channel in which flowmeter 41a is provided) and passed through the first dilution channel (first module group 101) at a flow rate of 0.20 L/min corresponding to 32 mass% of the total salt amount of the first target liquid.

At this time, the ratio of the total amount of salt fed to second chambers 12 of last module 1a (the tenth stage) and next-to-last module 1b (the ninth stage) to the total salt amount of the first target liquid was 64 mass% as with Example 1.

As a result, a flow resistance for sequential passage through each of second chambers 12 of first module group 101 in the direction from last module 1a to semipermeable membrane module 1x was 0.59 MPa.

Further, a flow resistance for sequential passage through each of second chambers 12 of second module group 102 in the direction from next-to-last module 1b to semipermeable membrane module 1y was 0.71 MPa.

Further, the salinity of the concentrated liquid discharged from first chamber 11 of last module 1a was 226 g/L.

### (Comparative Example 1)

A membrane separation device of Comparative Example 1 is basically the membrane separation device as illustrated in Fig. 3, and ten semipermeable membrane modules are coupled to each other.

In this membrane separation device, as with Example 1, a solution at 40°C with 66 g/L of sodium chloride dissolved was fed as the first target liquid to first chamber 11 of semipermeable membrane module 1y on the most upstream side of the concentration channel at a pressure of 6.5 MPa and a flow rate of 2.1 L/min.

Part of the concentrated liquid (flow rate: 0.47 L/min) discharged from first chamber 11 of last module 1a (the tenth stage) was fed to second chamber 12 of last module 1a and sequentially passed through each of second chambers 12 of semipermeable membrane modules 1a, 1x, and 1y. Note that the flow rate of 0.47 L/min is a flow rate adjusted so that 64 mass% of the total salt amount of the first target liquid flows through the second chambers as with Example 1.

As a result, a flow resistance when the second target liquid was sequentially passed through each of second chambers 12 of semipermeable membrane modules 1a, 1x, and 1y was 2.45 MPa.

Further, the salinity of the concentrated liquid discharged from first chamber 11 of last module 1a was 191 g/L, which is lower than that in Examples 1 and 2. This may be because of the following reason. An average pressure of second chambers 12 in Comparative Example 1 was higher than that in Examples 1 and 2, which reduced a pressure difference for moving water from first chamber 11 to second chamber 12 through semipermeable membrane 10. Thus, the concentration factor of the first target liquid was reduced.

### (Comparative Example 2)

A membrane separation device of Comparative Example 2 is basically the membrane separation device as illustrated in Fig. 4, and ten semipermeable membrane modules are coupled to each other. Note that, in Comparative Example 2, booster pump 3 is provided between the second chamber of the third stage semipermeable membrane module from the upstream side of the concentration channel and the second chamber of the fourth stage semipermeable membrane module.

In this membrane separation device, as with Example 1, a solution at 40°C with 66 g/L of sodium chloride dissolved was fed as the first target liquid to first chamber 11 of semipermeable membrane module 1y on the most upstream side of the concentration channel at a pressure of 6.5 MPa and a flow rate of 2.1 L/min.

Part of the concentrated liquid (flow rate: 0.40 L/min) discharged from first chamber 11 of last module 1a (the tenth stage) was fed to second chamber 12 of last module 1a and sequentially passed through each of second chambers 12 of semipermeable membrane modules 1a, 1x, and 1y. Note that the flow rate of 0.40 L/min is a flow rate adjusted so that 64 mass% of the total salt amount of the first target liquid flows through the second chambers as with Example 1.

Also, by operating booster pump 3, the pressure at an outlet of second chamber 12 of the fourth stage semipermeable membrane module from the upstream side of the concentration channel was reduced to atmospheric pressure, and the liquid was fed from second chamber 12 of the third stage semipermeable membrane module to second chamber 12 of the first stage semipermeable membrane module.

As a result, a flow resistance when the second target liquid was sequentially passed through each of second chambers 12 up to the fourth stage semipermeable membrane module from the upstream side of the concentration channel was 1.23 MPa. Further, a flow resistance when the second target liquid was sequentially passed through each of second chambers 12 from the third stage semipermeable membrane module from the upstream side of the concentration channel up to the first stage semipermeable membrane module 1y from the upstream side of the concentration channel was 1.22 MPa.

Further, the salinity of the concentrated liquid discharged from first chamber 11 of last module 1a was 222 g/L.

In Comparative Example 2, an average pressure of second chambers 12 of the entire membrane separation device was reduced to be lower than that in Comparative Example 1 by operating booster pump 3, but not reduced to the average pressure of second chambers 12 in Examples 1 and 2. Thus, it is considered that the salinity of the obtained concentrated liquid was slightly lower than that in Examples 1 and 2.

Note that, compared to Examples 1 and 2, the membrane separation device of Comparative Example 2 requires the additional pump and also requires complicated control, and is thus not desirable in terms of facility costs and energy consumption.

### REFERENCE SIGNS LIST

1x, 1y: semipermeable membrane module, 1a: semipermeable membrane module (last module), 1b: semipermeable membrane module (next-to-last module), 10: semipermeable membrane, 11: first chamber, 12: second chamber, 101: first module group, 102: second module group, 2: high pressure pump, 3: booster pump, 41, 41a, 41b, 42a, 42b: flowmeter

## Claims

1. A membrane separation device that is a multistage membrane separation device including four or more semipermeable membrane modules (1a;1b;1x;1y), in which
each of the semipermeable membrane modules (1a;1b;1x;1y) includes a semipermeable membrane (10), and a first chamber (11) and a second chamber (12) separated by the semipermeable membrane (10);
the membrane separation device comprising:
a concentration channel including all the first chambers (11) of the semipermeable membrane modules (1a;1b;1x;1y) connected in series;
a first dilution channel including the second chambers (12) of a first module group (101), wherein the first module group (101) includes the odd-numbered stage semipermeable membrane modules (1a;1x) from the downstream side of the concentration channel, all the second chambers (12) being connected in series;
a second dilution channel including the second chambers (12) of a second module group (102), wherein the second module group (102) includes the even-numbered stage semipermeable membrane modules (1b;1y) from the downstream side of the concentration channel, all the second chambers (12) being connected in series; and
a pressurizer (2) for pressurizing a first target liquid inside the first chamber (11) to a pressure higher than a pressure of a second target liquid inside the second chamber (12),
wherein the device is configured such that:
a first target liquid is to be passed through the concentration channel,
a second target liquid is to be passed through the first dilution channel and the second dilution channel, and
the first target liquid is to have a higher pressure than the second target liquid, whereby, in each of the semipermeable membrane modules (1a;1b;1x;1y), water contained in the first target liquid inside the first chamber (11) is to move to the second target liquid inside the second chamber (12) through the semipermeable membrane (10), and concentrated liquid is to be discharged from the first chamber (11) and diluted liquid is to be discharged from the second chamber (12), and
wherein the second target liquid
sequentially flows through each of second chambers (12) of the first module group (101) in the direction from semipermeable membrane module (1a) to semipermeable membrane module (1x) and,
in parallel with this, sequentially flows through each of second chambers (12) of the second module group (102) in the direction from semipermeable membrane module (1b) to semipermeable membrane module (1y).

2. The membrane separation device according to claim 1, further comprising a channel for allowing part of the concentrated liquid discharged from the first chamber (11) of a last module that is the first stage semipermeable membrane module (1a) from the downstream side of the concentration channel to flow, in a divided manner, into the second chamber (12) of the last module (1a) and the second chamber (12) of a next-to-last module (1b) that is the second stage semipermeable membrane module from the downstream side of the concentration channel.

3. The membrane separation device according to claim 1, further comprising:
a channel for allowing part of the concentrated liquid discharged from the first chamber (11) of a last module (1a) that is the first stage semipermeable membrane module from the downstream side of the concentration channel to flow into the second chamber (12) of the last module (1a); and
a channel for allowing part of the concentrated liquid discharged from the first chamber (11) of a next-to-last module (1b) that is the second stage semipermeable membrane module from the downstream side of the concentration channel to flow into the second chamber (12) of the next-to-last module (1b).

4. The membrane separation device according to any one of claims 1 to 3, wherein the semipermeable membrane (10) is a hollow fiber membrane.

5. The membrane separation device according to claim 4, wherein, in each of the semipermeable membrane modules (1a;1b;1x;1y), the first chamber (11) is an outside of the hollow fiber membrane, and the second chamber (12) is an inside of the hollow fiber membrane.

6. The membrane separation device according to claim 1, wherein one or more other semipermeable membrane modules may be further connected in parallel to each of semipermeable membrane modules 1a, 1b, 1x, and 1y coupled in series.

7. A concentrating method, wherein the concentrating method uses the multistage membrane separation device according to any one of claims 1 to 6.

## Patentansprüche

1. Eine Membrantrennvorrichtung, bei der es sich um eine mehrstufige Membrantrennvorrichtung handelt, die vier oder mehr semipermeable Membranmodule (1a; 1b; 1x; 1y) enthält, wobei
jedes der semipermeablen Membranmodule (1a; 1b; 1x; 1y) eine semipermeable Membran (10) und eine erste Kammer (11) und eine zweite Kammer (12), die durch die semipermeable Membran (10) getrennt sind, enthält;
wobei die Membrantrennvorrichtung umfasst:
einen Konzentrationskanal, der alle ersten Kammern (11) der semipermeablen Membranmodule (1a; 1b; 1x; 1y) enthält, die in Reihe verbunden sind;
einen ersten Verdünnungskanal, der die zweiten Kammern (12) einer ersten Modulgruppe (101) enthält, wobei die erste Modulgruppe (101) die semipermeablen Membranmodule (1a; 1x) der ungeradzahligen Stufen von der stromabwärtigen Seite des Konzentrationskanals enthält, wobei alle zweiten Kammern (12) in Reihe verbunden sind;
einen zweiten Verdünnungskanal, der die zweiten Kammern (12) einer zweiten Modulgruppe (102) enthält, wobei die zweite Modulgruppe (102) die semipermeablen Membranmodule (1b; 1y) der geradzahligen Stufen von der stromabwärtigen Seite des Konzentrationskanals enthält, wobei alle zweiten Kammern (12) in Reihe verbunden sind; und
eine Druckbeaufschlagungsvorrichtung (2) zum Beaufschlagen einer ersten Zielflüssigkeit im Inneren der ersten Kammer (11) mit einem Druck, der höher ist als ein Druck einer zweiten Zielflüssigkeit im Inneren der zweiten Kammer (12),
wobei die Vorrichtung derart konfiguriert ist, dass:
eine erste Zielflüssigkeit durch den Konzentrationskanal geleitet werden soll,
eine zweite Zielflüssigkeit durch den ersten Verdünnungskanal und den zweiten Verdünnungskanal geleitet werden soll und
die erste Zielflüssigkeit einen höheren Druck als die zweite Zielflüssigkeit aufweisen soll, wodurch in jedem der semipermeablen Membranmodule (1a; 1b; 1x; 1y) Wasser, das in der ersten Zielflüssigkeit im Inneren der ersten Kammer (11) enthalten ist, durch die semipermeable Membran (10) in die zweite Zielflüssigkeit im Inneren der zweiten Kammer (12) befördert werden soll und konzentrierte Flüssigkeit aus der ersten Kammer (11) abgeleitet werden soll und verdünnte Flüssigkeit aus der zweiten Kammer (12) abgeleitet werden soll, und
wobei die zweite Zielflüssigkeit
sequentiell durch jede der zweiten Kammern (12) der ersten Modulgruppe (101) in der Richtung vom semipermeablen Membranmodul (1a) zum semipermeablen Membranmodul (1x) fließt und,
parallel dazu, sequentiell durch jede der zweiten Kammern (12) der zweiten Modulgruppe (102) in der Richtung vom semipermeablen Membranmodul (1b) zum semipermeablen Membranmodul (1y) fließt.

2. Die Membrantrennvorrichtung nach Anspruch 1, ferner umfassend einen Kanal, der es ermöglicht, dass ein Teil der konzentrierten Flüssigkeit, der aus der ersten Kammer (11) eines letzten Moduls, bei dem es sich um das semipermeable Membranmodul (1a) der ersten Stufe von der stromabwärtigen Seite des Konzentrationskanals handelt, abgeleitet wird, in einer geteilten Weise in die zweite Kammer (12) des letzten Moduls (1a) und die zweite Kammer (12) eines vorletzten Moduls (1b), bei dem es sich um das semipermeable Membranmodul der zweiten Stufe von der stromabwärtigen Seite des Konzentrationskanals handelt, fließen kann.

3. Die Membrantrennvorrichtung nach Anspruch 1, ferner umfassend:
einen Kanal, der es ermöglicht, dass ein Teil der konzentrierten Flüssigkeit, der aus der ersten Kammer (11) eines letzten Moduls (1a), bei dem es sich um das semipermeable Membranmodul der ersten Stufe von der stromabwärtigen Seite des Konzentrationskanals handelt, abgeleitet wird, in die zweite Kammer (12) des letzten Moduls (1a) fließen kann; und
einen Kanal, der es ermöglicht, dass ein Teil der konzentrierten Flüssigkeit, der aus der ersten Kammer (11) eines vorletzten Moduls (1b), bei dem es sich um das semipermeable Membranmodul der zweiten Stufe von der stromabwärtigen Seite des Konzentrationskanals handelt, abgeleitet wird, in die zweite Kammer (12) des vorletzten Moduls (1b) fließen kann.

4. Die Membrantrennvorrichtung nach einem der Ansprüche 1 bis 3, wobei die semipermeable Membran (10) eine Hohlfasermembran ist.

5. Die Membrantrennvorrichtung nach Anspruch 4, wobei in jedem der semipermeablen Membranmodule (1a; 1b; 1x; 1y) die erste Kammer (11) eine Außenseite der Hohlfasermembran ist und die zweite Kammer (12) eine Innenseite der Hohlfasermembran ist.

6. Die Membrantrennvorrichtung nach Anspruch 1, wobei ein oder mehrere andere semipermeable Membranmodule ferner parallel zu jedem der in Reihe gekoppelten semipermeablen Membranmodule 1a, 1b, 1x und 1y verbunden sein können.

7. Ein Konzentrationsverfahren, wobei das Konzentrationsverfahren die mehrstufige Membrantrennvorrichtung nach einem der Ansprüche 1 bis 6 verwendet.

## Revendications

1. Dispositif de séparation à membranes qui est un dispositif de séparation à membranes à étages multiples comprenant quatre ou plus de quatre modules à membrane semi-perméable (1a ; 1b ; 1x ; 1y), dans lequel
chacun des modules à membrane semi-perméable (1a ; 1b ; 1x ; 1y) comprend une membrane semi-perméable (10), et une première chambre (11) et une deuxième chambre (12) séparées par la membrane semi-perméable (10) ;
le dispositif de séparation à membranes comprenant :
un canal de concentration comprenant toutes les premières chambres (11) des modules à membrane semi-perméable (1a ; 1b ; 1x ; 1y) connectées en série ;
un premier canal de dilution comprenant les deuxièmes chambres (12) d'un premier groupe de modules (101), dans lequel le premier groupe de modules (101) comprend les modules à membrane semi-perméable à étages impairs (1a ; 1x) depuis le côté aval du canal de concentration, toutes les deuxièmes chambres (12) étant connectées en série ;
un deuxième canal de dilution comprenant les deuxièmes chambres (12) d'un deuxième groupe de modules (102), dans lequel le deuxième groupe de modules (102) comprend les modules à membrane semi-perméable à étages pairs (1b ; 1y) depuis le côté aval du canal de concentration, toutes les deuxièmes chambres (12) étant connectées en série ; et
un pressuriseur (2) pour pressuriser un premier liquide cible à l'intérieur de la première chambre (11) à une pression supérieure à la pression d'un deuxième liquide cible à l'intérieur de la deuxième chambre (12),
ledit dispositif étant configuré de telle sorte que :
un premier liquide cible doit être acheminé à travers le canal de concentration,
un deuxième liquide cible doit être acheminé à travers le premier canal de dilution et le deuxième canal de dilution, et
le premier liquide cible doit avoir une pression supérieure à celle du deuxième liquide cible, de sorte que, dans chacun des modules à membrane semi-perméable (1a ; 1b ; 1x ; 1y), l'eau contenue dans le premier liquide cible à l'intérieur de la première chambre (11) doit se déplacer vers le deuxième liquide cible à l'intérieur de la deuxième chambre (12) à travers la membrane semi-perméable (10), et un liquide concentré doit être évacué de la première chambre (11) et un liquide dilué doit être évacué de la deuxième chambre (12), et
dans lequel le deuxième liquide cible
s'écoule successivement à travers chacune des deuxièmes chambres (12) du premier groupe de modules (101) dans la direction allant du module à membrane semi-perméable (1a) au module à membrane semi-perméable (1x), et
parallèlement à cela, s'écoule successivement à travers chacune des deuxièmes chambres (12) du deuxième groupe de modules (102) dans la direction allant du module à membrane semi-perméable (1b) au module à membrane semi-perméable (1y).

2. Dispositif de séparation à membranes selon la revendication 1, comprenant en outre un canal pour permettre à une partie du liquide concentré évacuée de la première chambre (11) du dernier module qui est le module à membrane semi-perméable de premier étage (1a) depuis le côté aval du canal de concentration de s'écouler, d'une manière divisée, dans la deuxième chambre (12) du dernier module (1a) et la deuxième chambre (12) de l'avant-dernier module (1b) qui est le module à membrane semi-perméable de deuxième étage depuis le côté aval du canal de concentration.

3. Dispositif de séparation à membranes selon la revendication 1, comprenant en outre :
un canal pour permettre à une partie du liquide concentré évacuée de la première chambre (11) du dernier module (1a) qui est le module à membrane semi-perméable de premier étage depuis le côté aval du canal de concentration de s'écouler dans la deuxième chambre (12) du dernier module (1a) ; et
un canal pour permettre à une partie du liquide concentré évacuée de la première chambre (11) de l'avant-dernier module (1b) qui est le module à membrane semi-perméable de deuxième étage depuis le côté aval du canal de concentration de s'écouler dans la deuxième chambre (12) de l'avant-dernier module (1b).

4. Dispositif de séparation à membranes selon l'une quelconque des revendications 1 à 3, dans lequel la membrane semi-perméable (10) est une membrane à fibres creuses.

5. Dispositif de séparation à membranes selon la revendication 4, dans lequel, dans chacun des modules à membrane semi-perméable (1a ; 1b ; 1x ; 1y), la première chambre (11) est l'extérieur de la membrane à fibres creuses, et la deuxième chambre (12) est l'intérieur de la membrane à fibres creuses.

6. Dispositif de séparation à membranes selon la revendication 1, dans lequel un ou plusieurs autres modules à membrane semi-perméable peuvent être en outre connectés en parallèle à chacun des modules à membrane semi-perméable 1a, 1b, 1x et 1y couplés en série.

7. Méthode de concentration, ladite méthode de concentration utilisant le dispositif de séparation à membranes à étages multiples selon l'une quelconque des revendications 1 à 6.
